(19) Europäisches Patentamt
European Patent Office
Office européen des brevets

(11) **EP 3 326 421 B1**

(12) **FASCICULE DE BREVET EUROPEEN**

(45) Date de publication et mention
de la délivrance du brevet:
**29.01.2020 Bulletin 2020/05**

(21) Numéro de dépôt: **16741605.6**

(22) Date de dépôt: **19.07.2016**

(51) Int Cl.:
***H04W 74/08*** *(2009.01)*   ***H04W 16/14*** *(2009.01)*

(86) Numéro de dépôt international:
**PCT/EP2016/067117**

(87) Numéro de publication internationale:
**WO 2017/013088 (26.01.2017 Gazette 2017/04)**

(54) **PROCÉDÉ D'ACCÈS OPPORTUNISTE AU SPECTRE**

VERFAHREN FÜR DEN OPPORTUNISTISCHEN ZUGANG ZUM SPEKTRUM

METHOD FOR OPPORTUNISTIC ACCESS TO THE SPECTRUM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.07.2015 FR 1556916**

(43) Date de publication de la demande:
**30.05.2018 Bulletin 2018/22**

(73) Titulaire: **Institut National des Sciences
Appliquees (INSA)
35708 Rennes Cédex 07 (FR)**

(72) Inventeurs:
 • **MODI, Navikkumar
Gujarat 384002 (IN)**
 • **MOY, Christophe
35520 La Chapelle des Fougeretz (FR)**
 • **MARY, Philippe
35510 Cesson-Sevigne (FR)**

(74) Mandataire: **Vidon Brevets & Stratégie
16B, rue de Jouanet
BP 90333
35703 Rennes Cedex 7 (FR)**

(56) Documents cités:
**EP-A1- 2 205 016       WO-A1-2010/047763
WO-A2-2009/031825**

 • **QING ZHAO ET AL: "Decentralized cognitive MAC
for opportunistic spectrum access in ad hoc
networks: A POMDP framework", IEEE JOURNAL
ON SELECTED AREAS IN COMMUNICATIONS,
IEEE SERVICE CENTER, PISCATAWAY, US, vol.
25, no. 3, 1 avril 2007 (2007-04-01), pages 589-600,
XP011177058, ISSN: 0733-8716, DOI:
10.1109/JSAC.2007.070409**

EP 3 326 421 B1

**Description**

**1. Domaine de l'invention**

L'invention se rapporte à l'exploitation des ressources spectrales et plus particulièrement à l'accès opportuniste au spectre pour des communications radio.

L'allocation statique des bandes de fréquence à différentes applications et services de communication radio sans fil a abouti à une pénurie de ressource spectrale. Néanmoins de nombreuses études ont montré une sous-utilisation chronique des bandes de fréquence considérées, ce qui représente une opportunité importante de communication.

C'est dans ce contexte qu'a été proposé le concept d'accès opportuniste au spectre.

**2. Art antérieur**

Le concept d'accès opportuniste au spectre définit deux classes d'utilisateurs : les utilisateurs primaires et les utilisateurs secondaires. Les utilisateurs primaires sont prioritaires pour l'accès aux ressources spectrales qui sont dédiées à leurs services. Les utilisateurs secondaires, par opposition aux utilisateurs primaires, sont des utilisateurs non prioritaires souhaitant utiliser l'opportunité d'accès à des ressources spectrales inutilisées par les utilisateurs primaires à un instant donné.

Il convient alors d'optimiser la méthode d'accès opportuniste des utilisateurs secondaires aux bandes de fréquence d'un réseau primaire qui est utilisé également par une population d'utilisateurs primaires prioritaires.

On considère uniquement un réseau primaire synchrone, c'est à dire pour lequel le temps est découpé en intervalles de durée constante, également appelés trames temporelles dans la présente divulgation.

La bande de fréquence dédiée au réseau primaire est divisée en K sous-bandes de fréquences indépendantes appelées canaux. Au cours de chaque trame temporelle t, chaque canal est soit dans un état « libre », et ce canal représente alors pour un utilisateur secondaire une opportunité d'accès au spectre correspondant, soit dans un état « occupé », le canal étant par exemple utilisé par un utilisateur primaire durant cette trame temporelle particulière.

Dans la suite de la présente divulgation, on appellera « utilisateur secondaire » l'équipement radio, muni de différents détecteurs lui permettant de collecter des informations sur son environnement et en particulier sur l'état dans lequel se trouve au moins un canal k lors d'une trame temporelle t. L'utilisateur secondaire est également muni de moyens de communication radio (émission, réception), de mémoire électronique, d'au moins un élément de calcul de type microprocesseur et d'une batterie. Un produit programme d'ordinateur exécuté par le microprocesseur permet de faire fonctionner le dispositif.

On considère habituellement que l'utilisateur secondaire n'a a priori aucune connaissance sur la disponibilité des différents canaux à un instant t, ni sur la probabilité qu'un canal k particulier soit disponible à un instant t. Pour exploiter de façon optimale les ressources spectrales, il va alors devoir apprendre les caractéristiques du réseau primaire, et en particulier estimer la probabilité de disponibilité de chaque canal. L'utilisateur aura à sa disposition de nombreuses variables qui vont être calculées et affinées au fur et à mesure qu'il collectera des informations sur son environnement. Ces variables doivent être initialisées, par exemple en étant fixées à une valeur arbitraire, ou bien en procédant à une phase d'initialisation balayant au moins une fois chaque canal.

Dans le formalisme de l'apprentissage par renforcement, un agent intelligent observe son environnement décrit par un état, puis cet agent intelligent prend une décision aboutissant à une action, et l'agent reçoit une récompense (également appelée gain) fonction de l'action et de l'état. De nombreuses méthodes d'accès opportunistes selon l'art antérieur utilisent un processus de décision Markovien pour modéliser l'évolution de l'état d'un canal.

Dans le contexte considéré, l'agent intelligent est le programme exécuté par le microprocesseur de l'utilisateur secondaire : il observe son environnement et lors de chaque trame temporelle il décide de tenter une communication avec un utilisateur secondaire distant en utilisant un canal k particulier pendant une trame temporelle t. La communication échouera ou sera effectuée selon que le canal était occupé ou libre pendant la trame t considérée.

Le modèle dit de bandit manchot (Multi Armed Bandit en anglais) est un cas particulier de processus de décision pouvant s'appliquer à un modèle Markovien du réseau primaire, et plus particulièrement de l'occupation des canaux fréquentiels par les utilisateurs primaires, dans lequel on considère l'agent intelligent comme un joueur de casino devant choisir une machine à sous sur laquelle il va jouer, parmi plusieurs machines à sous ayant différentes probabilités de gain.

Si le joueur avait une connaissance précise des probabilités de gain, il choisirait systématiquement la machine ayant la plus forte probabilité afin de maximiser ses gains. N'ayant pas connaissance a priori de ces probabilités, il va essayer de les estimer en jouant sur les différentes machines à sous.

Dans le contexte considéré, chaque canal k est modélisé comme une machine à sous ayant une probabilité inconnue d'être libre (gain). Le document "Decentralized cognitive MAC for opportunistic spectrum access in ag hoc networks: A POMDP framework", Qing Zhao et al., IEEE Journal On Selected Areas In Communications, IEEE Service Center, Piscataway, US, vol. 25, n°3, 1 avril 2007, pages 589-600, décrit un procédé d'accès opportuniste à une bande de fréquences dédiées à un réseau primaire synchrone par un utilisateur secondaire dans lequel la bande de fréquences est divisée en N canaux indépendants, un index de récompense est défini et un paramètre qui reflète la disponibilité du canal est attribué à chaque canal. Ce procédé a comme but d'optimiser la performance des utilisateurs secondaires , tout en limitant l'interférence par écoute du canal, en observant des états précédents de canaux et en réduisant la probabilité de collision.

Le document WO 2009/031825A2 décrit une méthode pour gérer un groupe de canaux dans un système de communication sans fils et plus particulièrement pour allouer une priorité appropriée à un canal disponible.

Le procédé d'accès opportuniste présentée dans la présente divulgation à pour objectif d'améliorer la performance moyenne par rapport aux méthodes basées sur le modèle de bandit manchot selon l'art antérieur. Plus précisément au moins un mode de réalisation permet d'augmenter le débit des données transmises ou reçues par l'appareil radio. Au moins un mode de réalisation permet également d'améliorer la consommation énergétique de l'appareil radio.

## 3. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :

Fig. 1 représente de façon schématique le principe de l'accès opportuniste, par un utilisateur secondaire, au spectre d'un réseau primaire synchrone selon l'art antérieur ;
Fig. 2 représente de façon schématique un procédé d'accès opportuniste d'un utilisateur secondaire à une bande de fréquences selon un mode de réalisation de la présente divulgation ;
Fig. 3 représente de façon schématique un procédé d'accès opportuniste à une bande de fréquences selon un autre mode de réalisation de la présente divulgation ;
Fig. 4 représente de façon schématique le principe de l'accès opportuniste, par un utilisateur secondaire, au spectre d'un réseau primaire synchrone selon un mode de réalisation conforme à la présente innovation.

## 4. Mode de réalisation

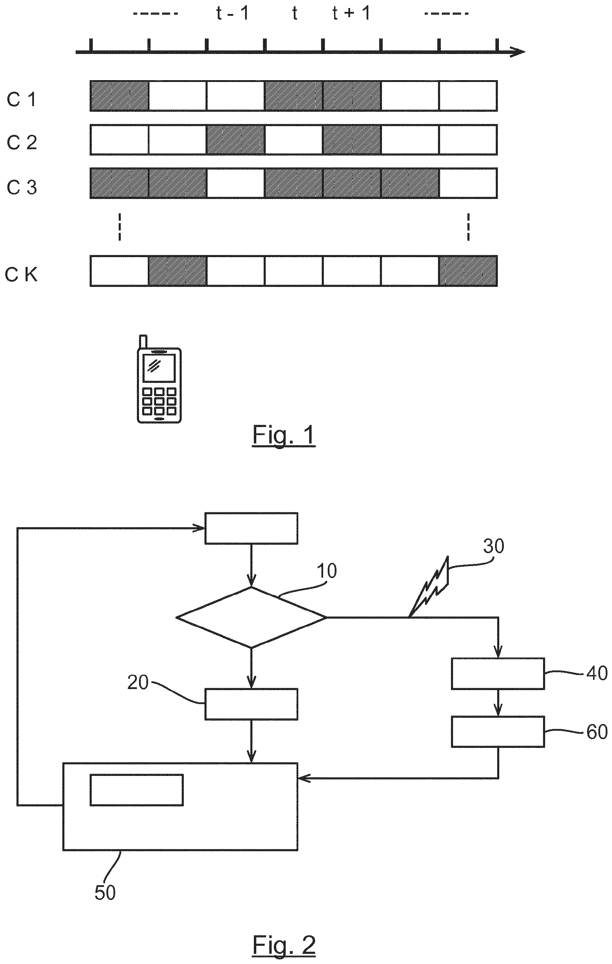

On décrit, en relation avec les figures **Fig. 2** à **Fig. 4**, un mode de réalisation conforme à l'innovation proposée dans la présente divulgation.

De façon classique, un réseau primaire synchrone met à disposition d'une communauté d'utilisateurs primaires prioritaires une bande fréquence décomposées en K sous-bandes appelées canaux.

Les utilisateurs primaires n'utilisent pas en permanence l'intégralité des ressources spectrales, ce qui offre des opportunités d'utilisation des ressources spectrales inutilisées par des utilisateurs secondaires non prioritaires. Un tel réseau primaire peut par exemple être prévu pour la sécurité civile : il doit être immédiatement disponible pour les organismes de sécurité civile en cas de besoin, mais le plus souvent le réseau est faiblement utilisé, et présente donc une ressource de spectre disponible à laquelle des utilisateurs secondaires peuvent accéder de façon opportuniste. D'une façon générale, l'accès opportuniste au spectre par les utilisateurs secondaires reste transparent pour les utilisateurs primaires qui ne perçoivent aucune modification ni dans le fonctionnement ni dans la qualité du service fourni.

**Fig. 1** représente de façon classique une matrice temps-fréquence de disponibilité des K canaux sur une petite durée de quelques trames temporelles, les canaux libres étant représentés en blanc et les canaux occupés en gris.

Un utilisateur secondaire cherche à obtenir un accès opportuniste à ce réseau primaire. L'utilisateur secondaire associe, sur la base de ses expériences effectuées jusqu'ici, à chaque canal k un index $B_k$, qui peut varier à chaque trame temporelle, notamment en fonction d'une disponibilité moyenne $\overline{S}_k$ du canal k empiriquement obtenue sur ses expériences passées. Comme l'utilisateur secondaire ne connaît pas a priori les caractéristiques du réseau primaire auquel il veut accéder, les variables $B_k$ et $\overline{S}_k$ sont initialisées par exemple en leur attribuant des valeurs arbitraires ou bien en procédant à une phase d'initialisation balayant chaque canal k au moins une fois.

Comme représenté schématiquement **Fig. 2**, au début de chaque trame temporelle t, l'utilisateur secondaire procède à une étape d'observation 10, pour vérifier la disponibilité du canal i dont l'index $B_i(t)$ est le plus élevé. Différentes méthodes classiques de détection peuvent être utilisées, comme un détecteur d'énergie (radiomètre), ou bien un détecteur de cyclostationarité.

Si le canal i n'est pas disponible pour cette trame temporelle t, alors l'utilisateur secondaire calcule lors d'une étape 20 une disponibilité moyenne $\overline{S}_i(t)$ du canal i, et attend la prochaine trame temporelle t+1 pour tenter d'établir une communication radio avec un utilisateur distant.

Si le canal i est disponible pour cette trame temporelle t, alors l'utilisateur secondaire initie une communication radio 30 avec un utilisateur distant, en utilisant les ressources spectrales du canal i. L'utilisateur secondaire calcule une disponibilité moyenne $\overline{S}_i(t)$ du canal i lors d'une étape 40.

Que le canal i soit disponible ou pas pendant la trame temporelle t, l'index $B_i(t)$ sera mis à jour lors d'une étape 50 en fonction de $\overline{S}_i(t)$ pour permettre à l'utilisateur secondaire d'observer puis éventuellement d'utiliser pendant la trame temporelle t+1 le canal j dont l'index $B_j(t+1)$ sera le plus élevé.

Les indices $B_k$ étant chacun mis à jour en fonction de la disponibilité moyenne $\overline{S}_k$ du canal considéré, l'utilisateur secondaire exploite les résultats des phases d'observation successives, de façon à privilégier les canaux les plus souvent disponibles.

Jusqu'à ce point la méthode d'accès opportuniste décrite est similaire à d'autres méthodes décrites dans l'art antérieur. Ces procédés aboutissent dans l'exemple représenté **Fig. 1** à un choix plus fréquent des canaux 2 et K, car au fur et à mesure que l'utilisateur secondaire explorera son environnement, les indices $B_2$ et $B_k$ augmenteront par rapport aux indices des autres canaux qui sont moins fréquemment disponibles.

Mais, du point de vue de l'utilisateur secondaire, tous les canaux libres ne se valent pas. En effet, si tous lui permettent effectivement d'initier une communication avec un utilisateur distant, certains canaux disponibles lui offrent une meilleure qualité que d'autres. La méthode d'accès opportuniste selon la présente divulgation permet de sélectionner en priorité les canaux à la fois disponibles et proposant la meilleure qualité.

Selon un premier mode de réalisation représenté **Fig. 2**, lorsque le canal i est disponible et que ses ressources spectrales sont utilisées par l'utilisateur secondaire pour effectuer une communication radio avec un utilisateur distant, un indice de qualité $R_i$ (t) du canal i est calculé au cours de la trame temporelle t lors d'une étape 60. A la fin de la trame temporelle t, les indices $B_k$ (t) de tous les canaux sont mis à jour en fonction de la disponibilité moyenne $\overline{S}_i(t)$ et de l'indice de qualité $R_i(t)$ du canal i.

L'indice de qualité $R_i(t)$ du canal i peut être calculé de différentes manières. Selon un mode de réalisation, le rapport signal sur bruit (en anglais Signal Noise Ratio ou SNR) est mesuré pendant la transmission de données durant la trame temporelle t, et utilisé pour calculer l'indice de qualité $R_i(t)$. Selon un autre mode de réalisation, c'est le rapport signal sur bruit plus interférence (en anglais Signal Interference and Noise Ration ou SINR) qui est mesuré pendant la transmission de données, et utilisé.

Dans un autre mode de réalisation, c'est la consommation électrique de l'utilisateur secondaire pendant la transmission de données qui est estimée ou mesurée, et utilisée pour calculer l'indice de qualité $R_i(t)$.

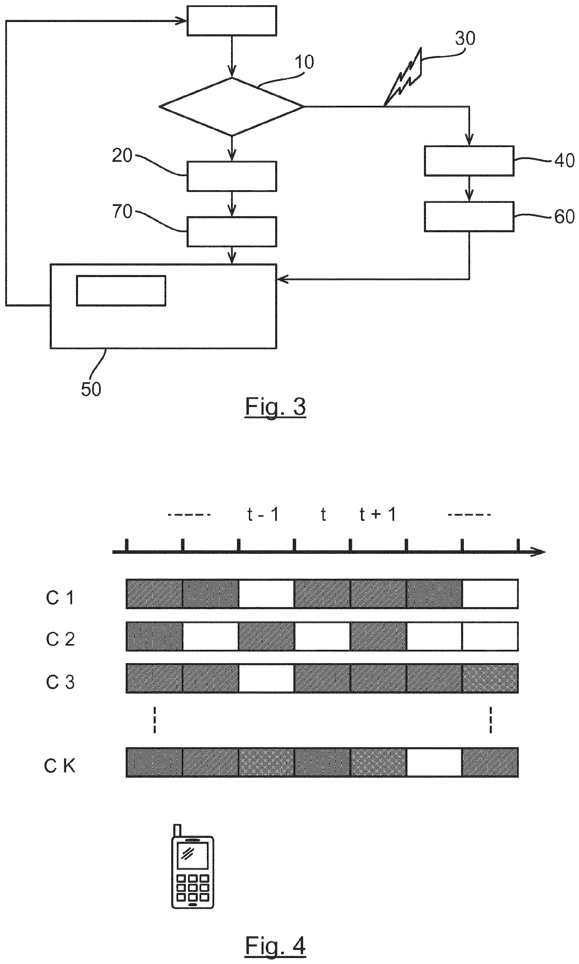

Selon un mode de réalisation représenté **Fig. 3**, un indice de qualité $R_i(t)$ du canal i est calculé lorsque le canal est occupé lors d'une étape 70. Naturellement puisqu'il n'y a pas de transmission de données, l'indice de qualité ne peut pas être une mesure de la qualité d'une transmission comme le rapport signal sur bruit ou signal sur bruit plus interférence. Il est toutefois possible d'obtenir un indice de qualité $R_i(t)$ du canal sur la base des résultats obtenus lors de la phase d'observation 10 permettant de vérifier la disponibilité du canal i.

Par exemple, si pendant la phase d'observation 10 un radiomètre mesure de façon classique $N_{éch}$ paires d'échantillons (X, Y), X étant mesuré sur une voie en phase I, et Y sur une voie en quadrature Q, alors la sortie du détecteur pourra être du type :

$$\text{Sortie} = \frac{1}{N_{éch}} \sum_{i=1}^{N_{éch}} (x_i^2 + y_i^2)$$

De façon classique la sortie du détecteur est comparée à un seuil pour déterminer si le canal est libre ou occupé. Lorsque le canal est occupé, le niveau de la sortie du détecteur peut servir lors de l'étape 70 pour obtenir un indice de qualité $R_i(t)$ du canal i car plus le niveau de la sortie sera élevé, meilleure sera la qualité du canal i.

De façon similaire, des indices de qualité $R_i(t)$ peuvent être déterminés lors de l'étape 70 pour les autres types de détecteurs utilisés lors de la phase d'observation 10 pour vérifier la présence ou d'absence d'un signal sur le canal i.

Dans un mode de mise œuvre, un premier mode de calcul d'un indice de qualité $R_i(t)$ peut être utilisé lorsque le canal n'est pas libre lors de l'étape 70, un second mode de mode de calcul (par exemple mesurant la qualité de la transmission) étant utilisé lors de l'étape 60 lorsque le canal i est libre et que l'utilisateur secondaire y accède de façon opportuniste pour établir une communication avec un utilisateur distant.

Selon un mode de mise en œuvre, le meilleur indice de qualité $R_{max}$ sur l'ensemble des canaux est conservé, et la différence entre $R_{max}$ et $R_i(t)$ est prise en compte lors de la mise à jour de l'indice $B_i(t)$ lors de l'étape 50.

Selon un autre mode de mise en œuvre, les moyennes $G_k$ des indices de qualité $R_k$ de tous les canaux sont conservées, et chaque indice $B_k(t)$ est mis à jour lors de l'étape 50 en en fonction de la différence entre $G_{max}$ et la moyenne $G_k$ conservée. Cette différence peut être pondérée par le nombre de fois où le canal a été observé (c'est à dire le nombre de fois où l'indice $B_k$ a été le plus élevé parmi les indices des K canaux), depuis le début de l'accès opportuniste de l'utilisateur secondaire au spectre de ce réseau primaire, de façon à amener l'utilisateur secondaire à explorer de nouveaux canaux jusqu'alors peu fréquemment observés.

L'indice $B_k$ étant mis à jour lors de l'étape 50 en fonction de la qualité, cette donnée permet à la fois d'exploiter les résultats des mesures de qualité et donc de favoriser les canaux qui sont souvent libres tout en proposant une bonne qualité, mais aussi d'explorer les disponibilités d'autres canaux lorsqu'un canal est très souvent libre mais avec une qualité faible.

Enfin, selon un autre mode de réalisation, un biais $A_k(t)$ est calculé pour chaque canal, l'indice $B_k(t)$ étant mis à jour lors de l'étape 50 en fonction du biais $A_k(t)$. En particulier, ce biais peut prendre en compte le nombre de fois qu'un canal donné a été observé. De cette manière l'utilisateur secondaire est amené à explorer les disponibilités des canaux jusqu'alors peu observés, lorsque les canaux fréquemment observés ne sont pas assez souvent libres, ou qu'ils ne proposent pas une qualité suffisante.

En jouant sur les paramètres de la fonction de mise à jour des index $B_k$ de l'étape 50, on peut donner plus ou moins de poids aux disponibilités moyennes $\overline{S}_k$, à la mesure de la qualité $R_i$ (t) et aux biais $A_k$, de façon à privilégier l'expérience en matière de qualité, ou l'expérience en matière de disponibilité, ou bien l'exploration de canaux peu fréquemment observés.

Dans un mode de réalisation particulier, l'utilisateur secondaire est capable d'observer plusieurs canaux au cours de chaque trame temporelle t. Si une transmission n'est effectuée que sur un seul des canaux observés disponibles (celui ayant le plus fort indice B), l'observation de plusieurs canaux durant la trame temporelle t permet de mettre à jour plus rapidement les données relatives à la disponibilité moyenne et à la qualité de chaque canal. De même, il devient possible d'avoir plusieurs stratégies d'observation, par exemple une stratégie basée sur l'expérience et une stratégie exploratoire visant à observer un canal sur lequel l'utilisateur secondaire dispose de peu d'information.

**Fig. 4** correspond à **Fig. 1**, avec une indication de la qualité que l'on peut obtenir lors d'une trame temporelle lorsque le canal est disponible. Dans l'exemple représenté **Fig. 4**, l'utilisateur secondaire va privilégier le canal 2 par rapport au canal K, car si les fréquences de disponibilité des deux canaux restent identiques, en revanche l'indice de qualité $R_2$ étant meilleur en moyenne que $R_K$, l'indice $B_2$ va augmenter plus vite que $B_K$. Au final l'utilisateur secondaire obtiendra une transmission de meilleure qualité que celle qu'il aurait obtenue avec un procédé d'accès opportuniste selon l'art antérieur tel que représenté **Fig. 1**.

L'invention concerne également un produit programme d'ordinateur mémorisant un code exécutable pour la mise en œuvre de l'un des procédés d'accès opportuniste à une bande de fréquences précédemment décrits, ainsi qu'un dispositif de communication comprenant un tel produit programme d'ordinateur lui permettant, lorsqu'il est exécuté par le calculateur du dispositif, d'accéder de façon opportuniste au spectre d'un réseau primaire conformément à l'un des procédés précédemment décrits.

**Revendications**

1. Procédé d'accès opportuniste à une bande de fréquences dédiée à un réseau primaire synchrone par un utilisateur secondaire, la bande de fréquences étant divisée en K canaux indépendants, un index $B_k$ et une disponibilité moyenne $\overline{S}_k$ étant attribués à chaque canal k parmi les K canaux indépendants, ledit procédé comprenant à chaque trame temporelle t

    - une étape d'observation (10) par l'utilisateur secondaire d'un canal i dont l'index $B_i(t)$ est le plus grand,
    - une étape de mise à jour (40) de la disponibilité moyenne $\overline{S}_i$ du canal i,
    - lorsque le canal i est libre:

        ◦ une étape (30) de transmission de données établie durant la trame t, sur le canal i, entre l'utilisateur secondaire et un utilisateur distant, et
        ◦ une étape (60) de calcul d'un indice de qualité $R_i(t)$ du canal i,

    - une étape (50) de mise à jour des index $B_k(t)$ des K canaux en fonction des disponibilités moyennes $\overline{S}_k$, de $R_i(t)$ et en fonction d'un biais $A_k(t)$ calculé pour chaque canal k, ledit biais $A_k(t)$ prenant en compte un nombre de fois que le canal k a été observé.

2. Procédé d'accès opportuniste à une bande de fréquences selon la revendication 1, **caractérisé en ce que**, si le canal i est libre,

    - la qualité de la transmission de données est mesurée
    - l'indice de qualité $R_i(t)$ du canal i est calculé en fonction de la mesure de la qualité de la transmission.

3. Procédé d'accès opportuniste à une bande de fréquences selon la revendication 2, **caractérisé en ce que**

    - la qualité de la transmission de données est mesurée par le rapport signal sur bruit ou le rapport signal sur bruit plus interférence.

4. Procédé d'accès opportuniste à une bande de fréquences selon la revendication 2, **caractérisé en ce que**

    - la qualité de la transmission de données est mesurée par la consommation électrique durant la transmission de données.

5. Procédé d'accès opportuniste à une bande de fréquences selon l'une des revendications 1 à 4 **caractérisé en ce que**, lorsque le canal i est occupé,

    - un indice de qualité $R_i(t)$ est calculé,
    - les index $B_k(t)$ des K canaux sont mis à jour en

fonction de $\overline{S}_k$ et $R_i(t)$.

**6.** Procédé d'accès opportuniste à une bande de fréquences selon la revendication 5, **caractérisé en ce que**

- l'indice de qualité $R_i(t)$ du canal i est calculé en fonction de l'énergie mesurée par un radiomètre.

**7.** Produit programme d'ordinateur mémorisant un code exécutable pour la mise en œuvre du procédé d'accès opportuniste à une bande de fréquence selon la revendication 1 lorsqu'il est exécuté par un microprocesseur.

**8.** Dispositif de communication comprenant

- des moyens de communication radio;
- au moins une batterie ;
- au moins un calculateur ;
- de la mémoire ;
- au moins un capteur apte à observer la disponibilité d'un canal de fréquence **caractérisé en ce que** ledit dispositif comprend un produit programme d'ordinateur selon la revendication 7.

**Patentansprüche**

**1.** Verfahren für den opportunistischen Zugang zu einem Frequenzband, das durch einen sekundären Nutzer einem primären synchronen Netz dediziert ist, wobei das Frequenzband in K unabhängige Kanäle unterteilt ist, wobei ein Index $B_k$ und eine mittlere Verfügbarkeit $\overline{S}_k$ jedem Kanal k unter den K unabhängigen Kanälen K zugeordnet ist, wobei das Verfahren in jedem Zeitrahmen t umfasst:

- einen Schritt (10) der Beobachtung eines Kanals i, dessen Index $B_i(t)$ am größten ist, durch den sekundären Nutzer,
- einen Schritt (40) der Aktualisierung der mittleren Verfügbarkeit $\overline{S}_i$ des Kanals i,
- bei freiem Kanal i:

    ∘ einen Schritt (30) der Datenübertragung, welche während des Rahmens t über den Kanal i zwischen dem sekundären Nutzer und einem entfernten Nutzer eingerichtet wird und
    ∘ einen Schritt (60) der Berechnung eines Qualitätsindex $R_i(t)$ des Kanals i,

- einen Schritt (50) der Aktualisierung der Indizes $B_k(t)$ der K Kanäle in Abhängigkeit von den mittleren Verfügbarkeiten $\overline{S}_k$, von $R_i(t)$ und in Abhängigkeit eines Bias $A_k(t)$, der für jeden Kanal k berechnet wird, wobei der Bias $A_k(t)$ berücksichtigt, wie oft der Kanal k beobachtet worden ist.

**2.** Verfahren für den opportunistischen Zugang zu einem Frequenzband nach Anspruch 1, **dadurch gekennzeichnet, dass** bei freiem Kanal i

- die Qualität der Datenübertragung gemessen wird,
- der Qualitätsindex $R_i(t)$ des Kanals i in Abhängigkeit von der Messung der Übertragungsqualität berechnet wird.

**3.** Verfahren für den opportunistischen Zugang zu einem Frequenzband nach Anspruch 2, **dadurch gekennzeichnet, dass**

- die Qualität der Datenübertragung durch das Signal-Rausch-Verhältnis oder das Signal-Rausch-Verhältnis plus Interferenz gemessen wird.

**4.** Verfahren für den opportunistischen Zugang zu einem Frequenzband nach Anspruch 2, **dadurch gekennzeichnet, dass**

- die Qualität der Datenübertragung durch den Stromverbrauch während der Datenübertragung gemessen wird.

**5.** Verfahren für den opportunistischen Zugang zu einem Frequenzband nach einem der Ansprüche 1 bis 4, **dadurch gekennzeichnet, dass** bei besetztem Kanal i

- ein Qualitätsindex $R_i(t)$ berechnet wird,
- die Indizes $B_k(t)$ der K Kanäle in Abhängigkeit von $\overline{S}_k$ und $R_i(t)$ aktualisiert werden.

**6.** Verfahren für den opportunistischen Zugang zu einem Frequenzband nach Anspruch 5, **dadurch gekennzeichnet, dass**

- der Qualitätsindex $R_i(t)$ des Kanals i in Abhängigkeit von der durch ein Radiometer gemessenen Energie berechnet wird.

**7.** Computerprogrammprodukt, das einen ausführbaren Code zur Durchführung des Verfahrens für den opportunistischen Zugang zu einem Frequenzband nach Anspruch 1 speichert, wenn der Code durch einen Mikroprozessor ausgeführt wird.

**8.** Kommunikationsvorrichtung mit

- Funkkommunikationsmitteln,
- mindestens einer Batterie,
- mindestens einem Rechner,
- Speicherplatz,
- mindestens einem Sensor, der geeignet ist, die Verfügbarkeit eines Frequenzkanals zu beobachten,

**dadurch gekennzeichnet, dass** die Vorrichtung ein Computerprogrammprodukt nach Anspruch 7 umfasst.

**Claims**

1. Method of opportunistic access to a frequency band dedicated to a synchronous primary network by a secondary user, the frequency band being divided into K independent channels, an indicator $B_k$ and an average availability $\overline{S}_k$ being assigned to each channel k among the K independent channels, said method comprising
   at each time frame t

   - a step of observation (10) by the secondary user of the channel i having the greatest indicator $B_i(t)$,
   - a step for updating (40) the average availability $\overline{S}_i$ of the channel i,
   - when the channel i is free:

     ○ a step of data transmission (30) set up during the frame t, on the channel i, between the secondary user and a distant user, and
     ○ a step for computing (60) a quality index $R_i(t)$ of the channel i,

   - a step (50) for updating the indicators $B_k(t)$ of the K channels as a function of the average availabilities $\overline{S}_k$, of $R_i(t)$ and as a function of a bias $A_k(t)$ computed for each channel k, said bias $A_k(t)$ taking into account a number of time that the channel k has been observed.

2. Method of opportunistic access to a frequency band according to claim 1, **characterized in that**, if the channel i is free,

   - the quality of the data transmission is measured,
   - the quality index $R_i(t)$ of the channel i is computed as a function of the measurement of the quality of the transmission.

3. Method of opportunistic access to a frequency band according to claim 2, **characterized in that**

   - the quality of the data transmission is measured by the signal-to-noise ratio or the signal-to-noise-plus-interference ratio.

4. Method of opportunistic access to a frequency band according to claim 2, **characterized in that**

   - the quality of the data transmission is measured by the electricity consumption during the data transmission.

5. Method of opportunistic access to a frequency band according to any one of the claims 1 to 4 **characterized in that**, when the channel i is busy,

   - a quality index $R_i(t)$ is computed,
   - the indicators $B_k(t)$ of the K channels are updated as a function of $\overline{S}_k$ and $R_i(t)$.

6. Method of opportunistic access to a frequency band according to claim 5, **characterized in that**

   - the quality index $R_i(t)$ of the channel i is computed as a function of the energy measured by a radiometer.

7. Computer program product memorizing an executable code for the implementing of a method of opportunistic access to a frequency band according to claim 1 when it is executed by a microprocessor.

8. Communications device comprising :

   - radiocommunications means;
   - at least one battery;
   - at least one computer;
   - memory;
   - at least one sensor capable of observing the availability of a frequency channel **characterized in that** said device comprises a computer program product according to claim 7.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2009031825 A2

**Littérature non-brevet citée dans la description**

• Decentralized cognitive MAC for opportunistic spectrum access in ag hoc networks: A POMDP framework. **QING ZHAO et al.** IEEE Journal On Selected Areas In Communications. IEEE Service Center, 01 Avril 2007, vol. 25, 589-600